# EUROPEAN PATENT APPLICATION

(11) **EP 1 578 101 A1**
(43) Date of publication of application: **21.09.2005**
(21) Application number: 05380029.8
(22) Date of filing: 17.02.2005
(51) Int. Cl.: H04M 3/42

(54) **System and method for the termination of calls in a telecommunications network**

(30) Priority: 17.03.2004 ES 200400672
(71) Applicant: Vodafone Group PLC, Berkshire RG14 2FN (GB); Vodafone Espana, S.A., Madrid (ES)
(72) Inventor: Ocon Cardenas, Sergio Fernando, 28050 Madrid (ES)
(74) Representative: Carvajal y Urquijo, Isabel

(57) **Abstract**

The invention refers to a system and method for the termination of calls in a telecommunications network (100), for terminating a call from a calling subscriber (A) to a called subscriber (B), when the network is configured to allow that a call is terminated according to one termination option (t1) selected from among a plurality of available termination options (t1, t2, t3, t4) in the network. The system comprises means (1) for detecting a call from the calling subscriber (A) to the called subscriber (B), means (2) for determining a termination criterion established by the calling subscriber (A); and means (3) for continuing a termination process for terminating said call according to one termination option (t1) selected among the available termination options (t1, t2, t3, t4) in the network, according to the termination criterion established by the calling subscriber (A).

## Description

### FIELD OF THE INVENTION

The invention is included in the field of telecommunications and particularly refers to the so-called "termination" of calls during the process of communication establishment between two subscribers. One proposal of the invention is to allow that the calling subscriber has a certain control over how the call is terminated, for the purpose of, for example, being able to prevent unwanted terminations, and which many times imply costs for the calling subscriber, such as the forwarding of a call to a voicemail.

### BACKGROUND OF THE INVENTION

In telecommunications, a communication between two (or more) subscribers or customers is usually established by means of a call establishment process starting with a call establishment request by one of the subscribers, who can be called the "calling subscriber" (A). Usually, this call establishment request is carried out by dialling a subscriber number of the other subscriber, who can be called the "called subscriber" (B). The establishment of the call then follows a course depending on the features of the telecommunications network or networks involved (for example, depending on whether a fixed or mobile telecommunications network is involved, on the technology and protocols used, etc). Usually, the establishment includes a phase of assignment of network resources to the call, and a notification to the called subscriber (B) that communication is attempted to be established with him or her. Generally, the exchange of messages and data between the network nodes during the call establishment is carried out through a signalling network and usually does not involve any cost for the calling subscriber (A); specifically, the call establishment is usually free of charge until the moment in which what is called "terminating" the call in this document is carried out. Terminating the call basically consists of a change of the state of the call within the call establishment process, from an establishment state (including the negotiation between the network nodes to assign the network resources to the call, etc.) to one of the following states:
- active call (i.e., the call itself is established; in a conventional voice call, this corresponds to what occurs when the called subscriber (B) or party "picks up" and "accepts" the call: oral communication can be established between the calling (A) and the called (B) subscribers, and it is from this moment that the time charged to the calling subscriber (A) is counted;
- abort call (i.e., the calling subscriber decides to cancel the call before the call passes to the active state);
- reject call (i.e., subscriber B does not pick up, but rather indicates to the network that he or she does not want to answer the call);
- re-send the call to the voicemail or the like;
- any other state in which the network considers that the call is established (whereby, generally, an expense for the calling subscriber is incurred), as would be the case of any unconditional forwarding to another number when the latter picks up or cannot advance further, such as for example cases of congestion when the network cannot pass on the call due to the lack of resources, or when some signalling error occurs.

Before terminating the call, the calling subscriber (A) can receive an indication of the state of the call, for example, by means of tones indicating that the called subscriber is communicating or that a communication channel has been established but that the called subscriber still has not picked up the telephone / accepted the call.

In some cases, it can be considered that the termination has two phases: in a first phase, the calling subscriber (A) establishes communication with the control centre, and, by means of a control centre operator or a menu (for example, by voice or tones), the communication to a determined extension is terminated. However, from the point of view of the network, it is usually considered that the call is "terminated" with the establishment of the communication with the control centre, the moment from which the time charged to the calling subscriber (A) is counted.

Nowadays, there is a technical possibility to establish a data communication over IP (Internet Protocol) using systems for real time information exchange. Particularly, in the UMTS Release 5 (Universal Mobile Telecommunications System), the introduction of the IP Multimedia Subsystem (IMS) is proposed.

The capacities offered by the IMS are determined by the signalling protocol used (Session Initiation Protocol, SIP) and by architecture for the provision of services organized around the CSCF (Call State Control Function) nodes. The SIP protocol offers capacities for establishing, modifying and terminating an IP session (such as a video conference), and furthermore, for establishing a relationship between an IP address and an identity, allowing this identity to be found by searching for a subscriber, and inviting a subscriber to join a multimedia session. A multimedia session is a conference in which different associated means (such as voice and video) can be found. This conference is structured around a dialogue or relationship maintained for a while and is characterized in that all the participants of the session share the information about the state of the session. That is to say, all the participants of the communication consider that the state thereof is the same, regardless of which participant is considered, and there are mechanisms to ensure that there are no differences in the states considered by each one of them.

The CSCF nodes act as nodes of an intelligent network by means of events occurring during the signalling which allow for modifying the normal signalling of the call in order to include accesses to application servers, with effects on the signalling itself and on the call.

Since the introduction of ISDN ("Integrated Services Digital Network"), there is a possibility to exchange information during the call signalling. This information, basically from end to end, does not have a determined purpose. Furthermore, in the IMS environment or in any other IP-based environment, there is a capacity for communication prior to the establishment of the communication in real time, given that an element capable of using the IP protocol is capable of communicating with another one with which it has connectivity using this protocol. The signalling is carried out according to the IP protocol, thus the nodes participating in the communication must have the capacity to establish IP communications a priori, needing the signalling for additional tasks such as locating the called subscriber, reaching an agreement about the content of the communication which will be established, or reserving resources in the network. The SIP signalling is produced as an application of the IP protocol and uses all the capacities provided to it by said protocol.

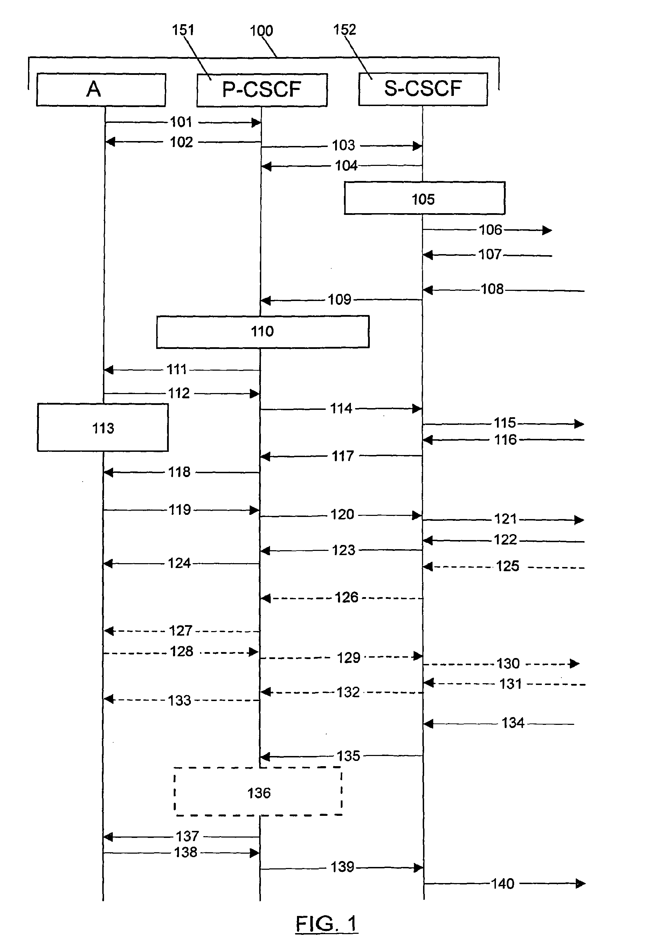

In multimedia environments, the signalling of a session (multimedia call), can be carried out in the following manner, described with reference to Figure 1, which schematically represents how a call is established in a current environment (IMS, 3GPP TS 24.228), wherein the call is established on the initiative of a calling subscriber (A), who belongs to a communications network 100 including, among other nodes, the "proxy-CSCF" (P-CSCF) node 151 and "Serving-CSCF" (S-CSCF) node 152. The establishment of the call comprises the following steps:
101: The calling subscriber A sends an invitation to the called subscriber (B) (not shown in Figure 1) by means of an INVITE-type SIP signalling package (IETF RFC 3261), indicating the type of communication to be established by means of a description in text format of the capacities of the terminal and the type of information to be exchanged, as well as the parameters necessary for finding the subscriber B.
102: The P-CSCF 151 is the first element of the network N of the operator receiving the INVITE. It responds with a message "100" (Trying) to indicate that it has received the INVITE.
103: The P-CSCF 151 searches for the S-CSCF 152 belonging to the calling subscriber A and resends the INVITE thereto.
104: The S-CSCF 152 responds with a message "100" (Trying) to indicate that it has received the INVITE.
105: The filter criteria allowing for including the Application Servers in the signalling are assessed. This will allow for adding added value services to the call.
106: The network of the called subscriber (B) (below: "the called network") (not shown in Figure 1) receives the message in its P-CSCF and searches for the called subscriber (B) in a location database. If it finds the subscriber, or an indication of how to find him or her (such as the address of another CSCF), it resends the message from the calling subscriber A to the S-CSCF corresponding to the called subscriber (B).
107: The S-CSCF of the called network responds with a message "100" (Trying) to indicate the reception of the message.
108: A message "183" (Session Progress) is sent from the called network. The description of the capacities of the terminal of the called subscriber (B) is included in this message within those necessary for the communication requested by subscriber A. This message is received in the S-CSCF node 152.
109: The S-CSCF 152 resends the message to the P-CSCF 151.
110: The network starts reserving resources necessary for the communication, which will be necessary in order to ensure the quality of the communication and to establish the channels for sending data.
111: The calling subscriber A receives the confirmation, by means of a message "183" (Session Progress), that it is possible for the called subscriber (B) to establish a communication.
112: The calling subscriber A begins requesting the service quality resources to the network, at the IP and radio link level.
113: There is an SIP communication to indicate when the two ends of the communication (subscribers A and B) have reserved the resources to be able to establish the communication.
114-115: A message PRACK is sent from subscriber A to indicate that the message "183" has been received. The PRACK-type message is used in cases in which it is wished to ensure the intermediate responses from end to end, i.e., to check that they have reached their destination (IETF RFC 3262).
116-118: Subscriber A receives a message "200" (OK)
119-121: Subscriber A sends a message UPDATE, the reception of UPDATE will indicate to subscriber B that there has been a change in the state of the session for subscriber A. In this case, it will indicate to B that subscriber A has reserved the resources he or she needed to establish the communication.
122-124: Subscriber A receives a message "200" (OK).
125-127: When the resources have been reserved, the mobile telephone of the called subscriber (B) rings, indicating that there is an incoming call. At the same time, a message "180" (Ringing) is sent to the calling subscriber A to communicate to him or her that the called subscriber (B) is being notified.
128-130: A message PRACK is sent from subscriber A.
131-133: Subscriber A receives a message "200" (OK)
134. If the called subscriber (B) picks up, the communication is accepted and a message "200" (OK) is sent to the calling subscriber A as a final response to his or her INVITE. This message "200" (OK) will activate the charging after passing through the CSCF given that from this moment on, both subscribers are enabled to receive or send data.
135-140: Once subscriber B sends "200" (OK) to subscriber A, he or she is indicating that an agreement has been reached and that he or she has the resources reserved for the communication, thus, he or she is prepared to receive data. This will make the P-CSCF approve the resource reservation which subscriber A has made after receiving the message "200" (OK). Once subscriber A receives the "200" (OK) from B, all the resources have been reserved in the network, therefore, he or she will be able to begin sending data to B. The same process must be carried out from subscriber A to subscriber B. In order to indicate to subscriber B that he or she can send data to A, the latter will use the response "200" (OK) which, according to the protocol, will be an ACK associated with the initial INVITE. When subscriber B receives the ACK, he or she can start sending data to A, and the communication will have been established.

As an alternative to the normal flow, various signallings according to the network configuration and the response of the called subscriber (B) can occur:
a) Subscriber B picks up: the call begins, notifying the subscriber, as described above.
b) Subscriber B is engaged or not available. There are different responses depending both on the configuration of the network by subscriber B and on the real state of the latter (out of coverage, unavailable because he or she is communicating, etc.), including the busy tone, re-direction to a voicemail, etc. The messages which will be sent depend on the response of subscriber B (who picks up or hangs up, for example), and on the processes carried out by the network to know the state of subscriber B. It is possible that the result of the communication is to establish a session with an entity (Application Server) acting in the place of B. This would be the case of an unconditional forwarding to the voicemail; in the moment of establishing communication with the voicemail, the time charged to the calling customer A would begin to be counted, despite that he or she possibly has no interest in being forwarded to a voicemail.
c) If subscriber B is available (network resources can be reserved and a beginning of communication is established) but does not pick up: after a while a process similar to that carried out in b) will be carried out again to decide the following steps of the call, which also depend on the configuration of parameters of the network by subscriber B. In this case a similar flow would take place in which "183" (Ringing) occurs, but the final response is not "200" (OK), rather an error message, or the forwarding to the voicemail configured for when subscriber B does not respond, etc., would occur The options in this case are different, since a response has already been obtained from subscriber B (subscriber B is considered unavailable since he or she has not responded, therefore additional information about the state of the latter is available which can be assimilated to a response).
d) If subscriber B is available and, after receiving the call notification (ringing tone in the terminal or any other notification means), subscriber B can signal to the network that he or she does not want to pick up the call, for example by means of pressing the hang-up button on his or her terminal. In this case the call is rejected. Subscriber A will receive a BYE as a final response. The message BYE is usually used to indicate that the intention is to terminate the communication. In this case it will indicate that subscriber B does not want to establish it.

Telecommunications networks offer increasingly more services, and more sophisticated services; a service very frequently used today is the forwarding of a call to a voicemail, as well as other types of call forwarding. For example, in advanced telecommunications networks, it is possible to forward a call to a web page. The problem is that many times, this type of terminations (forwarding to servers or services not explicitly requested by the calling subscriber (A)), in contrast to the initial call establishment process itself, implies costs. Due to this, it is possible that a calling subscriber (A) who wishes to contact a called subscriber (B) and therefore directs a call to him or her (for example, by dialling his or her telephone number) finds that the call is forwarded to an entity/server/service (for example, to a voicemail), and that the communication with said entity implying unwanted costs by the calling subscriber (A) (apart from the inconvenience which the undesired forwarding can cause) is established.

Currently, terminating telephone calls in telecommunications networks is carried out according to the indications of the called subscriber B; the latter can establish a series of termination criteria within a framework of possibilities offered by his or her telecommunications network. For example, subscriber B can, at any time, configure a series of termination selection parameters of the network, such that the termination of incoming calls is carried out according to what subscriber B wishes (for example, such that the calls are forwarded to a voicemail, to a web page, etc.). That is to say, the network provides the subscriber with a series of termination options, and the subscriber has the capacity to choose that incoming calls directed to the subscriber are terminated according to one of said options, or according to a series of alternative options according to, for example, the features of the calling subscriber (for example, subscriber B can establish that, as a first option, the incoming call should be forwarded to a web page, and as a second option, if the terminal of the calling subscriber A does not support this option (does not have internet navigation capacity), the call is to be forwarded to a voicemail).

However, as described above, this implies that a subscriber A, after attempting to establish a call to a subscriber B, can find that his or her call is forwarded to an entity or service which he or she has not requested and which inevitably makes him or her incur expenses (for example, at least the cost implied by the establishment of the communication with a voicemail).

### DESCRIPTION OF THE INVENTION

A first aspect of the invention refers to a system for the termination of calls in a telecommunications network, to terminate a call from a calling subscriber (A) to a called subscriber (B) (the expression "terminate the call" refers to a change of the state of the call according to what has been described above), the network being configured to allow that a call is terminated according to one termination option selected from among a plurality of available termination options (for example, t1, t2, t3, t4) in the network.

According to the invention, the system comprises:
means for detecting a call from the calling subscriber (A) to the called subscriber (B) during a phase of establishment of said call and prior to the termination of said call (for example, by means of an analysis of the signalling produced between subscriber A and the network by the elements of the network involved in said signalling);
means for determining (for example, as a direct or indirect response to the detection of the call) a termination criterion established by the calling subscriber (A); and
means for continuing a termination process for terminating said call according to one termination option (for example, t1) selected among the--available termination options (t1, t2, t3, t4) in the network, according to said termination criterion established by the calling subscriber (A). For example, the termination can be carried out according to the option corresponding to the criterion established by the calling subscriber (A), as long as this option is available for (accepted by) the called subscriber (B), and as long as the network has the necessary resources so that the termination process reaches its end -the termination itself- according to said option.

It is thus accomplished that the termination is not carried out exclusively taking into account the criteria of the called subscriber, but also those of the calling subscriber. That is to say, for example, the calling subscriber (A) can choose an option preventing the forwarding of the call to a voicemail (or to reject any option implying a cost without being able to speak with the called subscriber).

The system can comprise means for establishing, for at least one subscriber of the network (preferably, for several or all the subscribers), a set (TB) of available termination options (for example, t1, t2) for calls directed to said subscriber. That is to say, for example, a subscriber can choose, by means of configuring a series of parameters in a database of the network (for example, in the HSS- Home Subscriber Server; a master database with the data of the subscriber containing the information related to subscriptions of the subscriber for the use of the elements of the network participating in the control of the call- of a third generation mobile telecommunications network), that calls directed to him or her are terminated (perhaps according to a preference order), in one way or another (for example, by means of forwarding to a voicemail or by means of rejecting the call), according to the capacity of the terminal of the calling subscriber and according to the criteria established by the called subscriber (for example, if the calling subscriber has established a criterion implying that he or she does not accept that the call is forwarded to a voicemail, the call can simply be cancelled). For example, in practice, this can mean that the network would signal a call cancellation (sending a CANCEL to subscriber B, in the example based on IMS described above) if the only available options within those configured by subscriber B were cancellation and forwarding to the voicemail, and at the same time subscriber A had indicated to the network that the forwarding to the voicemail is not acceptable as a response to the call attempt. The network will likewise send the signalling to subscriber A that the communication has been cancelled by means of another CANCEL.

The means for determining at least one termination criterion established by the calling subscriber (A) can comprise:
- means for presenting to the calling subscriber (A), once a call from the calling subscriber to a called subscriber (B) is detected, available termination options (for example, t1 and t2) for said called subscriber (B) (these can be all the available terminations in the network and supported by the called subscriber, or only the terminations corresponding to options chosen by subscriber B, according to the parameters in a database in the network); and
- means for selecting, on the part of the calling subscriber, one (for example, t1) of said available termination options (for example, t1 and t2), as an option selected for terminating the call (these means can correspond to an application, available in the network or in the equipment itself of the calling subscriber, and which presents the available options to the calling subscriber, for example, those available in the network as such, or those which have been chosen by the called subscriber and which, therefore, are available in the case of a call to said subscriber; the presentation can be carried out by means of an on-screen or voice-activated menu, and the subscriber can choose an option, for example, by means of the keyboard of the terminal of the telephone). The means for continuing a termination process for terminating said call can be configured to continue the termination process according to the termination option selected by the called subscriber.
   That is to say, for example, if subscriber B has chosen the options of forwarding to a voicemail and of rejecting the call, when subscriber A calls subscriber B, a menu on the screen of the telephone can be presented to subscriber A requesting that he or she chooses between a forwarding to a voicemail, or the rejection of the call.
   The selection by menu can basically be carried out without cost for the calling subscriber, since it is part of the call signalling. There are mechanisms for exchanging information both in the ISDN networks and in multimedia environments. In the first case, data can be sent through the signalling channel. In the second case (IMS multimedia environment), this could result in a session established between the network and the calling subscriber (A) with any method of those allowed by the terminal. For example, a WAP ("Wireless Application Protocol") page can be used for presenting an options menu to the subscriber and for collecting his or her preferences, for using instant messaging or any other method acceptable for the subscriber. The cost of the alternative call for presenting information/menus can be established by the operator, which can decide if the cost will be borne by the calling subscriber A, by the called subscriber B, or by both, or by the network itself.
   The selection of the options can be carried out by means of any system allowing for interaction with-the subscriber, including voice portals, web pages, short messages (SMSs), or by means of a combination of several systems, depending on the capacities of the terminal and the preferences of the calling subscriber. The functioning could be the following: an options list is presented to subscriber A by means of a method (for example a WAP page or a voice communication), and the subscriber responds vocally, with a short message (SMS) with the response, or with the introduction of the response in the keyboard; these options are conventional and can be implemented by any person with average skills in the art. What is important is that a mechanism allowing a presentation of an options menu to subscriber A and which gathers a response from the latter, with the selection of one option of those offered, is provided. In order to avoid excessive waits for a response, there can be a system allowing the network to choose an option as preferred if, after a determined (configurable) time, the subscriber has not responded with any other option.
   The system can comprise means for establishing, by the calling subscriber (A), a set (TA) of termination options (for example, t1 and t3) selected by the subscriber (this set can comprise a single option or several ones, according to the wish of the subscriber), and the means for determining at least one termination criterion established by the calling subscriber (A) can be configured to detect said set of termination options (t1, t3) selected by the subscriber (the selection can correspond to the configuration of parameters in a database in the system -for example, in the HSS of the third generation mobile telecommunications networks -, which can be consulted by the means for determining at least one termination criterion). The means for continuing a termination process for terminating said call can be configured to continue the termination process according to one termination option of said set (TA) of termination options (t1, t3) selected by the subscriber, as long as said option is an available termination option (t1, t2) for the called subscriber (B).
   That is to say, if the called subscriber (B) has chosen two options (t1, t2), and the calling subscriber (A) has chosen two options (t1, t3), one of which coincides with those which have been chosen by the called subscriber, the call is terminated -if the resources of the network allow it- according to the coinciding option (for example, automatically, although it is also possible to establish that a confirmation from the calling subscriber is always required). If several options coincide, it is possible to establish that a menu with the available alternatives (those which both the calling and the called subscribers have chosen) is presented to the calling subscriber, so that the calling subscriber (A) chooses that which he or she prefers. It is also possible for the choice to be made automatically, for example, according to preferences indicated by the called subscriber or by the calling subscriber in the corresponding database.
   The available termination options can include the forwarding the call to a voicemail, to a telephone number, to a web or WAP page, cancelling the call, etc.
   By default, it can be recommendable for the calling subscriber to always have the option of cancelling or rejecting the call.
   That is to say, the system can comprise means for establishing, by the calling subscriber (A), a set (TA) of termination options (t1, t3) selected by the subscriber by means of configuring at least one parameter in a database. Furthermore, the system can comprise selection means for selecting configured, according to a selection action of the calling subscriber (A), for conditioning the termination process for terminating a call such that said termination process, selectively,
- continues according to one termination option of said set (TA) of termination options (t1, t3) selected by the subscriber, as long as said option is an available termination option (t1, t2) for the called subscriber (B); or
- continues according to one termination option specifically selected by the subscriber for said call (for example, according to "any available option for the called subscriber", "forwarding to a voicemail is not accepted", etc.).

The aspect of the "selection" or "pre-selection" of a set of termination options has already been commented above. However, the selection means for selecting (for example, an option in a menu which can be activated by the subscriber) allow the subscriber, by applying the "selection action", to "deactivate" the pre-selection of options for a specific call or for a group of calls (for example, all the calls following the selection action, until the subscriber deactivates said selection action), such that the termination process for terminating said call or said calls is not conditioned by the (pre)selected options in the database, but rather it can be carried out according to other options specifically chosen by the calling subscriber for said call or said calls. For example, it is possible that the subscriber has "pre-selected" the option implying forwarding to a voicemail; however, if for one specific call the subscriber does not want to be forwarded to a voicemail, he or she can carry out the selection action (for example, by means of a series of commands via menu) and establish that, for this specific call, he or she does not accept a termination consisting of forwarding to a voicemail. Logically, the practical implementation of this part of the system can be carried out in many ways, which can easily be implemented by the person with skills in the art.

Another aspect of the invention refers to a method for the termination of calls in a telecommunications network, for terminating a call from a calling subscriber (A) to a called subscriber (B), in a network configured to allow that a call is terminated according to one termination option selected from among a plurality of available termination options (t1, t2, t3, t4) in the network.

According to the invention, the method comprises the following steps:
detecting a call from the calling subscriber (A) to the called subscriber (B), during a phase of establishment of said call and prior to the terminating said call;
determining (preferably, as a direct or indirect response to the detection of the call) a termination criterion established by the calling subscriber (A); and
continuing a termination process for terminating said call according to one termination option (t1) selected among the available termination options (t1, t2, t3, t4) in the network, according to said termination criterion established by the calling subscriber (A).

The method can comprise the step for establishing, for at least one subscriber of the network, a set (TB) of available termination options (t1, t2) for calls directed to said subscriber.

The step for determining at least one termination criterion established by the calling subscriber (A) can comprise the steps of:
presenting to the calling subscriber (A), once a call from the calling subscriber to a called subscriber (B) is detected, available termination options (t1, t2) for said called subscriber (B);
selecting, by the calling subscriber (A), one (t1) of said available termination options (t1, t2) as an option selected for terminating the call;
continuing the termination process for terminating said call according to the termination option (t1) selected by the calling subscriber.

Furthermore, the method can comprise the steps of:
establishing, in a phase prior to the call and by the calling subscriber (A), a set (TA) of termination options (t1, t3) selected by the subscriber;
determining, in relation to the establishment of the call, said set of termination options (t1, t3) selected by the subscriber;
continuing the termination process for terminating said call according to one termination option of said set of termination options (t1, t3) selected by the subscriber, as long as said option is an available termination option (t1, t2) for the called subscriber (B).

The set (TA) of termination options (t1, t3) selected by the-subscriber can be established by means of the configuration of at least one parameter in a database.

That is to say, a set (TA) of termination options (t1, t3) selected by the subscriber by means of the configuration of at least one parameter in a database, can be established by the calling subscriber (A). Furthermore, according to a preferred embodiment of the invention, it can be selected, for one call (or for a series of calls), by means of a selection action by the calling subscriber (A) (for example, by means of choosing an option in a menu), how to continue the termination process for terminating the call, such that said termination process, selectively,
- continues according to one termination option of said set of termination options (t1, t3) selected by the subscriber, as long as said option is an available termination option (t1, t2) for the called subscriber (B); or
- continues according to one termination option specifically selected by the subscriber for the said call.

### BRIEF DESCRIPTION OF THE DRAWINGS

A series of drawings helping to better understand the invention, and some of which schematically show preferred embodiments of said invention, is very briefly described below.
Figure 1 shows the signalling during the establishment of a call in a conventional system, according to the state of the art.
Figure 2 schematically shows some of the components forming a system according to a preferred embodiment of the invention.
Figure 3 shows the signalling during forwarding to a voicemail in a conventional system, according to the state of the art.
Figure 4 shows the signalling in relation to a preferred embodiment of the invention.

### DESCRIPTION OF PREFERRED EMBODIMENTS OF THE INVENTION

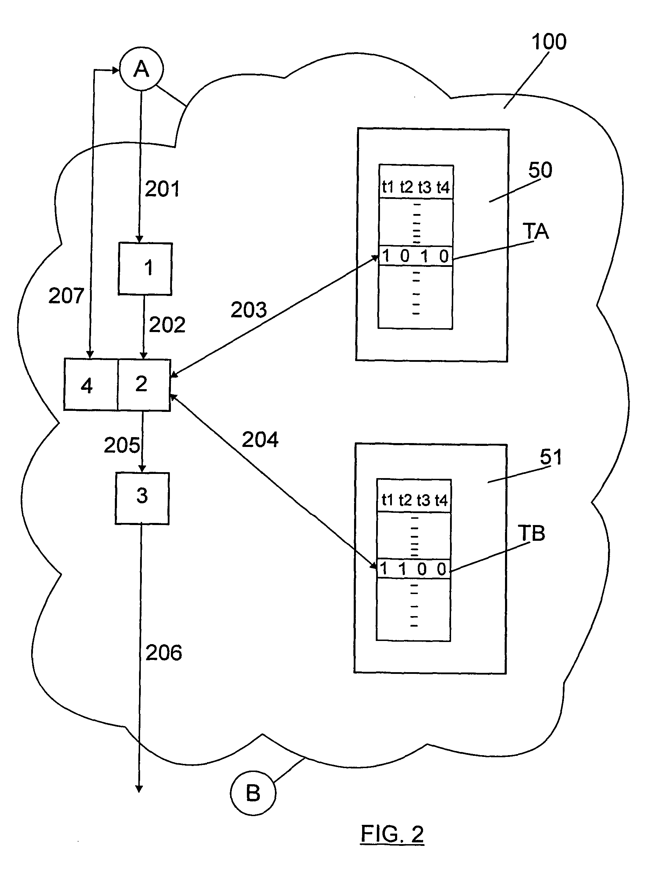

Figure 2 schematically illustrates a telecommunications network 100 through which a plurality of subscribers communicate. The network supports a plurality of possible call terminations, i.e., it presents a plurality of options (t1, t2, t3, t4) for terminating the calls (for example, forwarding to a voicemail, etc.) to the subscribers.

There is a database 50 for the subscribers, in which, for each subscriber of the network (or, at least, for some subscribers; it is possible to have several databases, for different groups of subscribers) there is a file (or data array) in which it is specified, by means of the configuration of the corresponding parameters, which are the terminations chosen by the subscriber, when he or she acts as a calling subscriber. Figure 2 illustrates a database which could correspond to a simple implementation of the invention, wherein a subscriber can choose a set TA of termination options which are accepted by him or her when he or she acts as a calling subscriber (A), by means of the selection of binary parameters in an array in which each position corresponds to one option; if the subscriber chooses one option t1, the value of the corresponding parameter is fixed at "1"; on the contrary, the value of the parameter is fixed at "0". Figure 2 schematically illustrates how the subscriber in question has opted to choose a Set TA comprising two options t1 and t3, which corresponds to an array of parameters "1010" corresponding to the subscriber in said database 50 (said base corresponds to a plurality of such arrays, one for each one of a plurality of subscribers).

On the other hand, there is a database 51 for the subscribers in which, for each subscriber of the network (or, at least, for some subscribers), there is a file (or data array) in which it is specified, by means of the corresponding parameters, which are the terminations chosen by the subscriber when he or she acts as a called subscriber (B). Figure 2 illustrates a database 51 in which subscriber B can choose a Set TB of termination options offered by him or her when he or she acts as a called subscriber, by means of the selection of binary parameters in an array in which each position corresponds to one option; if the subscriber chooses one option t1, the value of the corresponding parameter is fixed at "1"; on the contrary, the value of the parameter is fixed at "0". Figure 2 schematically illustrates how the subscriber in question has opted for choosing a set TB comprising two options t1 and t2, which corresponds to an array of parameters "1100" corresponding to subscriber B in the database 51.

When subscriber A attempts to establish a call to subscriber B, said attempt is detected (201) by means 1 for detecting a call from the calling subscriber (A) to the called subscriber (B), during a phase of establishment of said call and prior to the termination of said call. These means 1 can be implemented in an IMS network with the standard procedures of signalling events in the CSCFs activated by the reception of the SIP signalling.

On the other hand, the system has means 2 for determining a termination criterion established by the calling subscriber (A). In the case described, said means can comprise an application or routine which, invoked (202) by the means 1 for detecting the call, consults (203) the database 50 and determines the content of the array or set TA, which represents the termination criterion, in this case, that the calling subscriber (A) accepts only the terminations t1 and t3.

On the other hand, the database 51 is consulted (204) and the content of the array or set TB is determined, which represents the termination options offered by the called subscriber (B). In this case, the called subscriber offers the options t1 (for example, forwarding to a web page), and t2 (for example, forwarding to a voicemail). In this case, there is only one option, t1, which is accepted by the calling subscriber (A) and, at the same time, offered by the called subscriber (B). Given that the calling subscriber (A) does not accept the forwarding to a voicemail (t2), the only viable option accepted by both parts is the forwarding of the call to a web page.

Once this information is obtained, an application or routine which can constitute means 3 for continuing a termination process for terminating said call according to the termination option selected among the available termination options (t1, t2, t3, t4) in the network, according to said termination criterion established by the calling subscriber (A), is invoked (205). In this case, the application receives, from the means 2 for determining a criterion, the information indicating that the termination option to follow is the option t1, which is therefore executed (206).

In the case described, there was only one option accepted both by subscriber A and by subscriber B. However, if there had been two options accepted by both parties, for example, if subscriber A had had the option t2 marked as accepted ("1") in the database 50, the system would have not known which one to choose (t1 or t2). There are different possibilities for solving this problem.

For example, there is a possibility that, in the database 50 and/or 51, the accepted/offered options are not only indicated as accepted or not accepted ("1" or "0"), but rather a preference criterion (for example, instead of a single bit, a plurality of bits, representing, according to the value, a preference criterion, can be used) is indicated. Then, the system can be configured such that it takes into account the preference indicated by the calling subscriber (in the set TA), the called subscriber (in the set TB) or both, applying more or less complex selection criteria, according to what the operator of the system wishes.

Another alternative can consist of completing the described system with means 4 for presenting (207) to the calling subscriber (A), once a call from the calling subscriber to a called subscriber (B) is detected, the offered termination options (t1, t2) for said called subscriber (B); this can be carried out with an application which, once invoked, displays a menu on the screen of the terminal of the calling subscriber A showing the available options and requesting that he or she chooses one of the -options, for example, by-means-of the keyboard of the terminal. It is also possible to use a voice menu or any other solution considered suitable. That is to say, for example, if subscriber B has chosen the options of forwarding to a voicemail and of rejecting the call, when subscriber A calls subscriber B, a menu can be displayed to the former, requesting that he or she either accepts forwarding to the voicemail, or refuses the call. Thus, if the subscriber does not wish to be forwarded to the voicemail, he or she simply refuses the call.

Once the calling subscriber has chosen an option, the call is terminated according to the chosen option. The display and selection of options in menu form (on-screen, voice) can be a complement or alternative to the pre-selection of options in the database 50, i.e., if the system offers the possibility of selection via menu, the database 50 is not necessary for achieving the objectives. Here, the operator who wishes to put the system into practice will choose the most suitable solution according to that which he or she wishes to offer to the subscriber.

In order to establish the sets (TA, TB) of accepted and offered termination options, the subscribers can use any method offered by the network to its subscribers to gain access to the information in the databases associated to the client and modify them, such as calling the customer service telephone, the configuration in a web page associated to the subscriber, sending signalling SMSs to the network, the customisation in some of the offices of the operator, sending a fax, etc.

The invention is applicable to the currently existing telephony systems. For example, for ISDN environments, out-of-band signalling can be used, whereas for the integration with other systems, alternative methods, such as a voice recognition system, in those cases in which communication is not possible in a data channel, could be used as long as a two-way communication between the network and the customer is allowed.

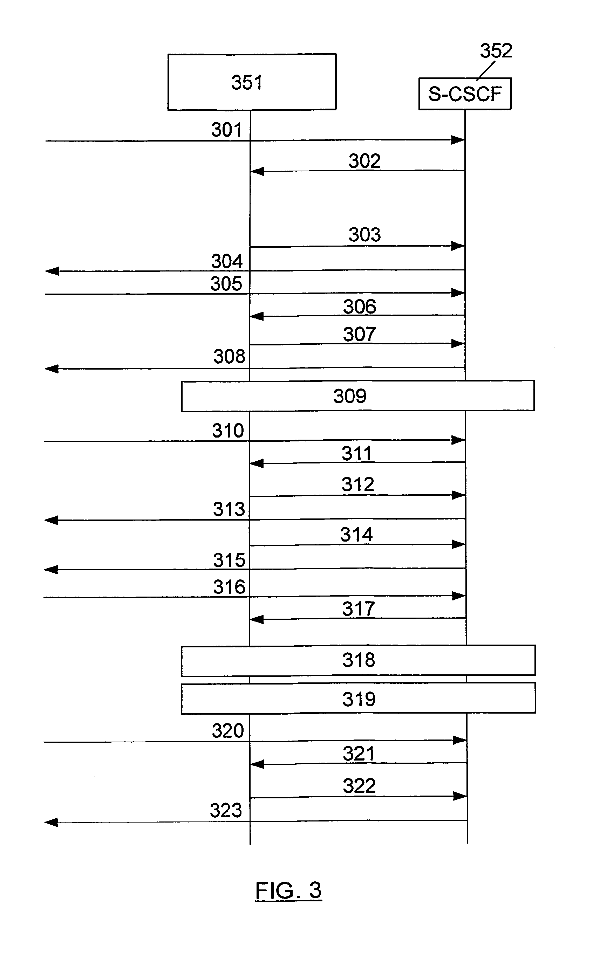

Briefly described below is an explanation of how the invention can be implemented over IMS, in a multimedia environment. Figure 3 shows the basic signalling, according to the state of the art, in a situation in which the calling subscriber A has a PDP (Packet Data Protocol) context establishing a communication channel with service features between a subscriber and the network and assigns an IP address to the terminal of a subscriber associated to said context, activated for IMS signalling, i.e., the subscriber has the capacity to send IP packages to the network, particularly (although it can also be carried out over a generic channel) for multimedia session signalling. In this example, the calling subscriber A wishes to establish a communication with the called subscriber B, both being registered in their respective networks. In the example set forth in the Figure 3, subscriber B does not have the telephone switched on and has the service of unconditional forwarding to a voicemail activated.

The call establishment flow is as follows:
301: Subscriber A sends an SIP signalling INVITE package to indicate that he or she wishes to establish a call to subscriber B, crossing the different CSCFs (only the C-CSCF 352 has been illustrated).
302: The S-CSCF acts due to the arrival of the INVITE and activates the processing of the call. It checks the configuration of termination parameters of the called subscriber B and detects that subscriber B is not accessible and that for these cases, he or she has pre-established the forwarding to a voicemail. As a result, the S-CSCF 352 decides to send the INVITE to the voicemail 351 ("Voicemail Server"), so that the latter, acting as subscriber B, picks up.
303: The voicemail terminates the call. That is to say, the signalling which has been forwarded thereto will allow it to act in the place of subscriber B and thus to act as subscriber B should act, responding to the message with a 183 ("Session Progress").

Then, the quality parameters are negotiated with the network; steps 304-323 correspond to the conventional flow in these cases, which the person with average skills in the art is familiar with, thus it is not necessary to describe it here. However, some of these steps are discussed as an example:
314: The communication with the voicemail is established. In this stage the voicemail has acted in the place of subscriber B and the communication, signalled as a call from subscriber A to subscriber B, is established between subscriber A and the voicemail. From this moment on, the call is in an active state and both ends of the communication (subscriber A and the voicemail) can talk and listen to each other mutually.
318: Subscriber A listens to a recording transmitted by the voicemail, instructing him or her on how to proceed. Usually this will be a message explaining to wait for a signal to talk, after which subscriber A can leave a message which will be stored. This step is carried out now with an established communication , thus subscriber A will be charged for a call to subscriber B.
319: Subscriber A can, if he or she wishes, leave a message in the voicemail.
320: In order to hang up and terminate the call, subscriber A sends an SIP package "BYE", to terminate the communication and free the resources of the network.

That is to say, in this case, corresponding to a conventional system according to the state of the art, subscriber A has wished to communicate with subscriber B and has been connected with a voicemail, and an expense corresponding to the complete call establishment has incurred, without subscriber A having had the possibility to choose another option (for example, refuse the call).

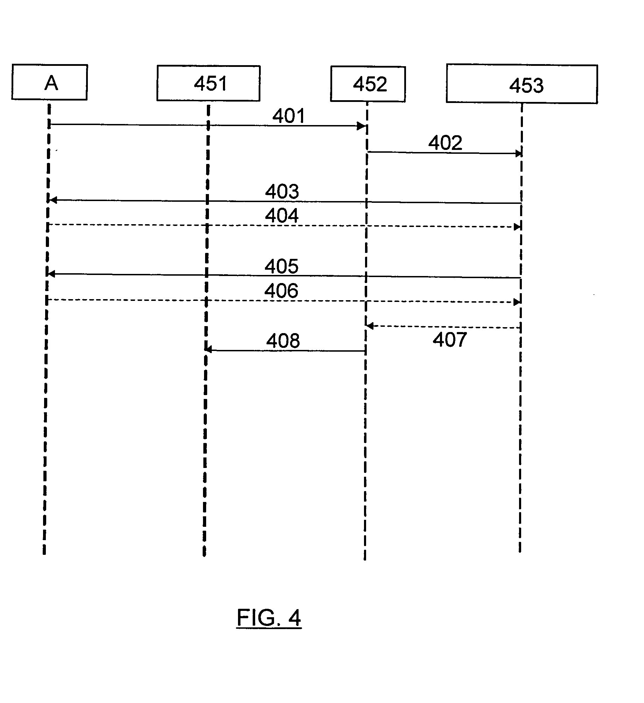

However, if this conventional system is modified, incorporating a system according to the invention, a scenario shown in Figure 4 can be reached. The idea is to incorporate a session in which options are presented to the calling subscriber A. For this, the S-CSCF 452 must identify the corresponding service, obtain the list of options enabled by subscriber B, reject those specified as unacceptable by subscriber A, and, in the event that there is still more than one possible option, establish what is usually called an early dialogue to be able to exchange information with subscriber A. An early dialogue is a dialogue, understood as an agreement between two points about the elements necessary for communicating, which is established without the communication attempted to be established being active, for exchanging information, such as, for example, a specific ringing tone which subscriber A hears to indicate that the telephone of B is ringing. In this case, the process includes the following steps:
401: Subscriber A sends an INVITE to the S-CSCF 452.
402: The CSCF 452 gains access to a database or server 453 to obtain information concerning how to continue the call and discovers that there are several viable options to do so, thus he or she stops the signalling and entrusts the server 453 to determine which of the options he or she should use.
403: The server 453 chooses a method to communicate with subscriber A and sends a communication request to subscriber A. This request will take place as part of the signalling for the call and does not constitute a call itself.
404: Subscriber A accepts this signalling communication, whereupon an agreement about the means which are going to be used is reached. This does not constitute an independent call.
405: It is determined which options are available within those selected by the called subscriber B, and it is communicated to the calling subscriber A which options he or she finally has available for terminating the call.
406: Subscriber A chooses one of the options. In this example, he or she chooses the forwarding to the voicemail (it is also possible that this selection is carried out after not receiving a response in a determined time, choosing one option by default selected by subscriber B or by the network).
407: The server 453 communicates to the C-CSCF the decision of A, whereupon the S-CSCR has enough information to continue the call.

The call continues as in the normal signalling (408: INVITE, etc.).

The information about the configuration of B and about the list of options which must be presented to subscriber A can be obtained in several points, either in the S-CSCF 452 or in the server 453. It is also possible that the options presented are configurable according to the characteristics of subscriber A (i.e., for example, it can be established that determined options are only offered to telephones having certain features, for example, those supporting certain services, etc).

Throughout the present description and claims, the word "comprise" and variations thereof, such as "comprising", do not intend to exclude other steps or components.

## Claims

1. A system for the termination of calls in a telecommunications network (100), for terminating a call from a calling subscriber (A) to a called subscriber (B) in a network configured to allow that a call is terminated according to one termination option (t1) selected from among a plurality of available termination options (t1, t2 t3, t4) in the network,
**characterized in that**
the system comprises:
means (1) for detecting a call from the calling subscriber (A) to the called subscriber (B) during a phase of establishment of said call and prior to the termination of said call;
means (2) for determining a termination criterion established by the calling subscriber (A); and
means (3) for continuing a termination process for terminating said call according to one termination option (t1) selected among the available termination options (t1, t2, t3, t4) in the network, according to said termination criterion established by the calling subscriber (A).

2. A system according to claim 1, **characterized in that** it comprises means for establishing, for at least one subscriber of the network, a set (TB) of available termination options (t1, t2) for calls directed to said subscriber.

3. A system according to any of the previous claims, **characterized in that** the means (2) for detecting at least one termination criterion established by the calling subscriber (A) comprise:
- means (4) for presenting to the calling subscriber (A), once a call from the calling subscriber to a called subscriber (B) is detected, available termination options (t1, t2) for said called subscriber (B);
- selection means for selecting, by the calling subscriber, one (t1) of said available termination options (t1, t2) as an option selected for the termination of the call;
the means (3) for continuing a termination process for terminating said call being configured to continue the termination process according to the selected termination option (t1).

4. A system according to any of previous claims, **characterized in that**:
it comprises means for establishing, by the calling subscriber (A), a set (TA) of termination options (t1, t3) selected by the subscriber;
the means (2) for determining at least one termination criterion established by the calling subscriber (A) are configured to detect said set of termination options (t1, t3) selected by the subscriber;
the means (3) for continuing a termination process for terminating said call are configured to continue a termination process according to one termination option of said set of termination options (t1, t3) selected by the subscriber, as long as said option is an available termination option (t1, t2) for the called subscriber (B).

5. A system according to claim 4, **characterized in that** the system includes a database (50) and **in that** the means for establishing, by the calling subscriber (A), a set (TA) of termination-options (t1, t3) selected by the subscriber, are configured to establish said set by means of the configuration of at least one parameter in said database.

6. A system according to any of claims 1-3, **characterized in that**:
it comprises means for establishing, by the calling subscriber (A), a set (TA) of termination options (t1, t3) selected by the subscriber by means of the configuration of at least one parameter in a database (50);
selection means configured to, according to a selection action of the calling subscriber (A), condition the termination process for terminating a call such that said termination process, selectively,
- continues according to one termination option of said set (TA) of termination options (t1, t3) selected by the subscriber, as long as said option is an available termination option (t1, t2) for the called subscriber (B); or
- continues according to one termination option specifically selected by the subscriber for the said call.

7. A system according to any of the previous claims, **characterized in that** at least one of the available termination options consists of forwarding the call to a voicemail.

8. A system according to any of the previous claims, **characterized in that** at least one of the available termination options consists of forwarding the call to a telephone number.

9. A system according to any of the previous claims, **characterized in that** at least one of the available termination options consists of forwarding the call to a web or WAP page.

10. A system according to any of the previous claims, **characterized in that** at least one of the available termination options consists of cancelling the call.

11. A method for the termination of calls in a telecommunications network (100), for terminating a call from a calling subscriber (A) to a called subscriber (B) in a network configured to allow that a call is terminated according to one termination option (t1) selected from among a plurality of available termination options (t1, t2 t3, t4) in the network,
**characterized in that**
the method comprises the following steps:
detecting (201) a call from the calling subscriber (A) to the called subscriber (B), during a phase of establishment of said call and prior to the termination of said call;
determining (203, 207) a termination criterion established by -the- -calling subscriber (A); and
continuing (206) a termination process for terminating said call according to one termination option (t1) selected among the available termination options (t1, t2, t3, t4) in the network, according to said termination criterion established by the calling subscriber (A).

12. A method according to claim 11, **characterized in that** it comprises a step for establishing, for at least one subscriber to the network, a set (TB) of available termination options (t1, t2) for calls directed to said subscriber.

13. A method according to any of claims 11 and 12, **characterized in that** the step for determining at least one termination criterion established by the calling subscriber (A) comprises the steps of:
- presenting to the calling subscriber (A), once a call from the calling subscriber to a called subscriber (B) is detected, available termination options (t1, t2) for said called subscriber (B);
- selecting, by the calling subscriber, one (t1) of said available termination options (t1, t2) as an option selected for terminating the call;
continuing the termination process for terminating said call according to the selected termination option (t1).

14. A method according to any of claims 11-13, **characterized in that** it comprises the steps of:
establishing, in a phase prior to the call and by the calling subscriber (A), a set (TA) of termination options (t1, t3) selected by the subscriber;
determining, in relation to the establishment of the call, said set of termination options (t1, t3) selected by the subscriber;
continuing the termination process for terminating said call according to one termination option of said set of termination options (t1, t3) selected by the subscriber, as long as said option is an available termination option (t1, t2) for the called subscriber (B).

15. A method according to claim 14, **characterized in that** the set (TA) of termination options (t1, t3) selected by the subscriber is established by means of the configuration of at least one parameter in a database (50).

16. A method according to any of claims 11-13, **characterized in that** it comprises the steps of:
establishing, by the calling subscriber (A), a set (TA) of termination options (t1, t3) selected by the subscriber by means of the configuration of at least one parameter in a database (50);
selecting for a call, by means of a selection action by the calling subscriber (A), how to continue the termination process for terminating the call, such that said termination process, selectively,
- continues according to one termination option of said set of termination options (t1, t3) selected by the subscriber, as long as said option is an available termination option (t1, t2) for the called subscriber (B); or
- continues according to one termination option specifically selected by the subscriber for the said call.
